# EUROPEAN PATENT APPLICATION

(11) **EP 4 722 174 A1**
(43) Date of publication of application: **08.04.2026**
(21) Application number: 24815297.7
(22) Date of filing: 21.05.2024
(51) Int. Cl.: C03C 3/068, C03C 3/062, C03C 3/095, C03C 3/097, C03C 3/15, C03C 3/16, C03C 3/19, G02B 27/28, G02F 1/09

(54) **GLASS MATERIAL AND MAGNETO-OPTIC ELEMENT**

(30) Priority: 26.05.2023 JP 2023086982
(71) Applicant: Nippon Electric Glass Co., Ltd., Otsu-shi, Shiga 520-8639 (JP)
(72) Inventor: SUZUKI Futoshi, Otsu-shi Shiga 520-8639 (JP)
(74) Representative: Hoffmann Eitle
(86) International application number: PCT/JP2024/018650
(87) International publication number: WO 2024/247813

(57) **Abstract**

Provided are a glass material and a magneto-optic element having a reduced thermal lensing effect. This glass material contains, in mol%, 10-58% of Tb₂O₃, 1-89% of B₂O₃+Al₂O₃+SiO₂+P₂O₅, and 0.01-100 ppm of FeO+Fe₂O₃, and contains, in outer mol%, more than 1% but not more than 20% of CeO₂.

## Description

### TECHNICAL FIELD

The present invention relates to a glass material and a magnetic optical element.

### BACKGROUND ART

Paramagnetic glass materials are known to exhibit the Faraday effect, which is one of magnetic optical effects. The Faraday effect is an effect that rotates linearly polarized light passing through a material placed in a magnetic field. Magnetic optical elements (for example, a Faraday rotator) that use this effect are used in magnetic optical devices such as an optical isolator.

As the paramagnetic glass materials, for example, a SiO₂-B₂O₃-Al₂O₃-Tb₂O₃ (Patent Literature 1) and a P₂O₅-B₂O₃-Tb₂O₃ (Patent Literature 2) are known.

### CITATION LIST

### PATENT LITERATURE

Patent Literature 1: JPS51-46524B
Patent Literature 2: JPS52-32881B

### SUMMARY OF INVENTION

### TECHNICAL PROBLEM

In recent years, the output of laser light emitted to the magnetic optical devices has increased. When the output of the laser light increases, the temperature of a magnetic optical element increases, and a laser beam diameter change (beam diameter change) is likely to occur due to a thermal lens effect. When such a beam diameter change occurs, the power density changes, and thus, for example, in the case where the magnetic optical element is used for processing, the processing quality deteriorates.

In view of the above, an object of the present invention is to provide a glass material and a magnetic optical element with a reduced thermal lens effect.

### SOLUTION TO PROBLEM

Aspects of a glass material and a magnetic optical element that solve the above problems will be described.

A glass material according to Aspect 1 contains, in mol%, from 10% to 58% of Tb₂O₃, from 1% to 89% of B₂O₃+Al₂O₃+SiO₂+P₂O₅, and from 0.01 ppm to 100 ppm of FeO+Fe₂O₃, and further contains more than 1% to 20% of CeO₂ as an external proportion.

It is preferable that a glass material according to Aspect 2 is based on Aspect 1, and contains, in mol%, from 0% to 70% of B₂O₃, from 0% to 70% of Al₂O₃, from 0% to 70% of SiO₂, and from 0% to 20% of P₂O₅.

It is preferable that a glass material according to Aspect 3 is based on Aspect 1 or Aspect 2, and contains, in mol%, more than 12% to 40% of B₂O₃, from 1% to 20% of Al₂O₃, from 0% to 40% of SiO₂, and from 0% to 5% of P₂O₅.

It is preferable that a glass material according to Aspect 4 is based on any one of Aspect 1 to Aspect 3, and contains, in mol%, less than 5% of Pr₂O₃, and less than 5% of Dy₂O₃.

It is preferable that a glass material according to Aspect 5 is based on any one of Aspect 1 to Aspect 4, in which a proportion of Tb³⁺ to total Tb is 55% or more.

It is preferable that a glass material according to Aspect 6 is based on any one of Aspect 1 to Aspect 5, in which a light transmittance is 80% or more at a wavelength of 1064 nm.

An magnetic optical element according to Aspect 7 contains the glass material according to any one of Aspect 1 to Aspect 6.

### ADVANTAGEOUS EFFECTS OF INVENTION

According to the present invention, it is possible to provide a glass material and a magnetic optical element with a reduced thermal lens effect.

### BRIEF DESCRIPTION OF DRAWINGS

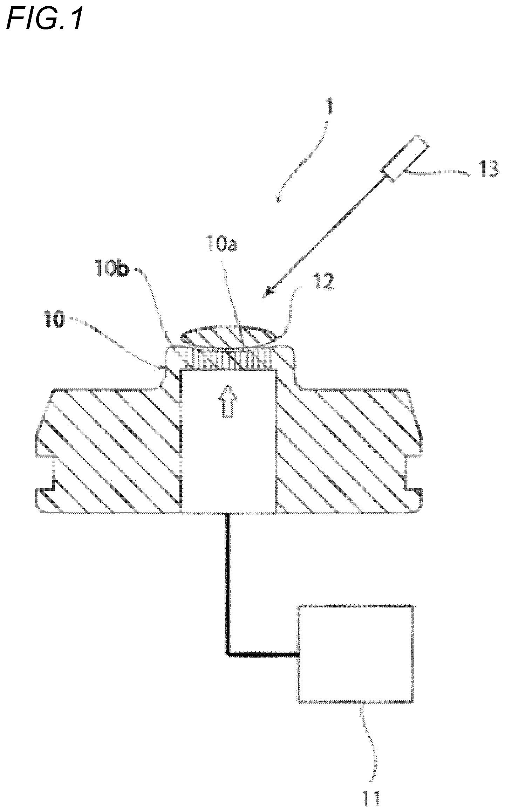

FIG. 1 is a schematic cross-sectional view showing one embodiment of an apparatus for manufacturing a glass material according to the present invention.

### DESCRIPTION OF EMBODIMENTS

A glass material according to the present invention contains, in mol%, from 10% to 58% of Tb₂O₃, from 1% to 89% of B₂O₃+Al₂O₃+SiO₂+P₂O₅, and from 0.01 ppm to 100 ppm of FeO+Fe₂O₃, and further contains, in mol% as an external proportion, more than 1% to 20% of CeO₂. Here, the expression "further contains, in mol% as an external proportion, more than 1% to 20% of CeO₂" means that the content of CeO₂ is more than 1% to 20% with respect to 100% of the total content of components other than CeO₂ in mol% (that is, the total amount is more than 101% to 120% in mol%).

The reason why the glass composition is defined in the above way and the content of each component will be described below. Note that, in the following description, "%" means "mol%" unless otherwise specified. In addition, "a visible to near-infrared wavelength range" in the following description is a wavelength range used for visible to near-infrared lasers, and unless otherwise specified, means a wavelength range of 300 nm to 2000 nm, particularly 300 nm to 1100 nm.

Tb₂O₃ is a component that increases the absolute value of the Verdet constant and that improves the Faraday effect. The content of Tb₂O₃ is preferably from 10% to 58%. More specifically, the content of Tb₂O₃ is preferably 10% or more, 12% or more, 15% or more, 16% or more, 18% or more, 20% or more, 21% or more, 22% or more, 25% or more, particularly preferably 26% or more, and is preferably 58% or less, 55% or less, 52% or less, 50% or less, 49% or less, 46% or less, 45% or less, 44% or less, 43% or less, 41.% or less, particularly preferably 40% or less. When the content of Tb₂O₃ is too small, it is difficult to obtain the above effects. When the content of Tb₂O₃ is too large, the vitrification is more difficult. In addition, a light transmittance of the glass material is likely to decrease, and a beam diameter change is likely to occur due to a thermal lens effect. Note that, Tb is present in the glass in a trivalent or tetravalent state, and in the present invention, all of these are expressed as Tb₂O₃.

The proportion of Tb³⁺ to total Tb is preferably 55% or more, 60% or more, 70% or more, 80% or more, and particularly preferably 90% or more. Accordingly, the proportion of Tb⁴⁺ to the total Tb can be reduced. Tb⁴⁺ has absorption in the wavelength range of 300 nm to 1100 nm, and the light transmittance of the glass material is likely to decrease. Therefore, when the proportion of Tb³⁺ to the total Tb is set to the above value, absorption of laser light in the visible to near-infrared wavelength range is prevented, and heat generation of the glass material is likely to be prevented. Therefore, the thermal lens effect is likely to be prevented. The upper limit of the proportion of Tb³⁺ to the total Tb may be, for example, 100% or less.

FeO and Fe₂O₃ are components that reduce the light transmittance in the visible to near-infrared wavelength range and that is likely to cause the thermal lens effect. Specifically, FeO (Fe²⁺) has broad absorption with a peak around a wavelength of 1200 nm. Therefore, the glass material absorbs laser light in the visible to near-infrared wavelength range and generates heat, which is likely to cause the thermal lens effect. On the other hand, since Fe₂O₃ (Fe³⁺) does not has the above absorption, the light transmittance can be increased. However, Fe₂O₃ (Fe³⁺) may be reduced to FeO during the melting process. Therefore, in the glass material according to the present invention, the content of FeO+Fe₂O₃ (total content of FeO and Fe₂O₃) is preferably from 0.01 ppm to 100 ppm. More specifically, the content of FeO+Fe₂O₃ is preferably 0.01 ppm or more, 0.05 ppm or more, 0.1 ppm or more, 0.2 ppm or more, 0.3 ppm or more, 0.4 ppm or more, 0.5 ppm or more, particularly preferably 1 ppm or more, and is preferably 100 ppm or less, 50 ppm or less, 30 ppm or less, 20 ppm or less, 15 ppm or less, 14 ppm or less, 13 ppm or less, 11 ppm or less, 10 ppm or less, 9 ppm or less, 8 ppm or less, particularly preferably 5 ppm or less. Note that, when the content of FeO+Fe₂O₃ is too small, the manufacturing cost is likely to increase.

CeO₂ is also a component that prevents the beam diameter change due to the thermal lens effect. The content (addition amount) of CeO₂ is preferably more than 1% to 20% in mol% as an external proportion. More specifically, the content (addition amount) of CeO₂ is preferably more than 1%, 1.1% or more, 1.2% or more, 1.5% or more, particularly preferably 2% or more, and is preferably 20% or less, 19% or less, 15% or less, particularly preferably 10% or less. When the addition amount of CeO₂ is too small, it is difficult to obtain the above effect. When the addition amount of CeO₂ is too large, the light transmittance of the glass material is likely to decrease rather.

In this way, even when the glass material according to the present invention contains FeO and Fe₂O₃ that are likely to cause the thermal lens effect by reducing the light transmittance, containing CeO₂ as an essential component can prevent a decrease in light transmittance of the glass material in the visible to near-infrared wavelength range and reduce the laser light absorption. Therefore, the glass material according to the present invention can have a reduced thermal lens effect.

B₂O₃, Al₂O₃, SiO₂, and P₂O₅ are components that form a glass network and that expand the vitrification range and stabilize the vitrification. The content of B₂O₃+Al₂O₃+SiO₂+P₂O₅ (total content of Al₂O₃, SiO₂, and P₂O₅) is preferably from 1% to 89%. More specifically, the content of B₂O₃+Al₂O₃+SiO₂+P₂O₅ is preferably 1% or more, 5% or more, 10% or more, 15% or more, 20% or more, 25% or more, 30% or more, 35% or more, 40% or more, 45% or more, particularly preferably 48% or more, and is preferably 89% or less, 85% or less, 80% or less, 75% or less, particularly preferably 70% or less. When the content of B₂O₃+Al₂O₃+SiO₂+P₂O₅ is too small, the vitrification is more difficult. When the content of B₂O₃+Al₂O₃+SiO₂+P₂O₅ is too large, it is difficult to obtain a sufficient Faraday effect. Note that, the preferred range of each component is as follows.

The content of B₂O₃ is preferably from 0% to 70%. More specifically, the content of B₂O₃ is preferably 0% or more, 1% or more, 5% or more, 10% or more, particularly preferably more than 12%, and is preferably 70% or less, 67% or less, 65% or less, 60% or less, 55% or less, 50% or less, 45% or less, particularly preferably 40% or less.

The content of Al₂O₃ is preferably from 0% to 70%. More specifically, the content of Al₂O₃ is preferably 0% or more, 1% or more, particularly preferably 2% or more, and is preferably 70% or less, 67% or less, 65% or less, 60% or less, 55% or less, 50% or less, 45% or less, 40% or less, 35% or less, 30% or less, 25% or less, particularly preferably 20% or less.

The content of SiO₂ is preferably from 0% to 70%. More specifically, the content of SiO₂ is preferably 0% or more, 1% or more, 5% or more, particularly preferably 10% or more, and is preferably 70% or less, 67% or less, 65% or less, 60% or less, 55% or less, 50% or less, 45% or less, particularly preferably 40% or less.

The content of P₂O₅ is preferably from 0% to 20%. More specifically, the content of P₂O₅ is preferably 0% or more, 1% or more, particularly preferably 2% or more, and is preferably 20% or less, 15% or less, 10% or less, particularly preferably 5% or less.

The glass material according to the present invention can contain the following components in addition to the above components.

GeO₂ is a component that forms a glass network and that expands the vitrification range and stabilizes the vitrification. The content of GeO₂ is preferably from 0% to 60%. More specifically, the content of GeO₂ is preferably 60% or less, 55% or less, 50% or less, 45% or less, 40% or less, and particularly preferably 35% or less. When the content of GeO₂ is too large, it is difficult to obtain a sufficient Faraday effect. From the viewpoint of expanding the vitrification range, the lower limit of the content of GeO₂ may be, for example, 0% or more, particularly 1% or more.

ZnO is a component that stabilizes the vitrification. The content of ZnO is preferably from 0% to 20%. More specifically, the content of ZnO is preferably 20% or less, 15% or less, 13% or less, 10% or less, 8% or less, and particularly preferably 5% or less. When the content of ZnO is too large, the devitrification is likely to occur. In addition, it is difficult to obtain a sufficient Faraday effect. From the viewpoint of stabilizing the vitrification, the content of ZnO may be 0% or more, particularly 1% or more.

La₂O₃, Gd₂O₃, Y₂O₃, and Yb₂O₃ are components that stabilize the vitrification. Therefore, each of the contents of La₂O₃, Gd₂O₃, Y₂O₃, and Yb₂O₃ is preferably 10% or less, 7% or less, 5% or less, 4% or less, 2% or less, and particularly preferably 1% or less. When the content of these components is too large, the vitrification is more difficult rather. The lower limit of the content of La₂O₃, Gd₂O₃, Y₂O₃, and Yb₂O₃ may be, for example, 0% or more, particularly 0.1% or more.

Pr₂O₃ and Dy₂O₃ have light absorption in the visible to near-infrared wavelength range. Therefore, each of the contents of Pr₂O₃ and Dy₂O₃ is preferably less than 5%, 4% or less, 3% or less, 2% or less, 1% or less, 500 ppm or less, and particularly preferably 100 ppm or less. When the content of these components is too large, the light transmittance in the visible to near-infrared wavelength range is likely to decrease. Note that, Pr and Dy present in the glass are present in a trivalent or tetravalent state, and in the present invention, Pr and Dy are respectively represented as Pr₂O₃ and Dy₂O₃. The lower limit of each of the contents of Pr₂O₃ and Dy₂O₃ may be, for example, 0% or more, particularly 0.001 ppm or more.

Eu₂O₃ and Sm₂O₃ have light absorption in the visible to near-infrared wavelength range. Therefore, each of the contents of Eu₂O₃ and Sm₂O₃ is preferably less than 5%, 3% or less, 2% or less, 1% or less, 500 ppm or less, and particularly preferably 100 ppm or less. When the content of these components is too large, the light transmittance in the visible to near-infrared wavelength range is likely to decrease. Note that, Eu and Sm present in the glass are present in a divalent or trivalent state, and in the present invention, Eu and Sm are respectively represented as Eu₂O₃ and Sm₂O₃. The lower limit of the content of each of Eu₂O₃ and Sm₂O₃ may be, for example, 0.001 ppm or more.

MgO, CaO, SrO, and BaO are components that stabilize the vitrification and that are likely to improve the chemical durability. Each of the contents of MgO, CaO, SrO, and BaO is preferably 10% or less, and particularly preferably 5% or less. When the content of these components is too large, it is difficult to obtain a sufficient Faraday effect. The lower limit of each of the contents of MgO, CaO, SrO, and BaO may be, for example, 0% or more, particularly 1% or more.

Ga₂O₃ is a component that stabilizes the vitrification and that is likely to expand the vitrification range. The content of Ga₂O₃ is preferably from 0% to 6%. More specifically, the content of Ga₂O₃ is preferably 6% or less, 5% or less, 4% or less, and particularly preferably 2% or less. When the content of Ga₂O₃ is too large, the devitrification is likely to occur. In addition, it is difficult to obtain a sufficient Faraday effect. The lower limit of the content of Ga₂O₃ may be, for example, 0% or more, particularly 1% or more.

Fluorine is a component that increases the glass-forming ability and that is likely to expand the vitrification range. The content of fluorine (in terms of F₂) is preferably from 0% to 10%. More specifically, the content of fluorine is preferably 10% or less, 7% or less, 5% or less, 3% or less, 2% or less, and particularly preferably 1% or less. When the content of fluorine is too large, there is a risk that the components volatilize during melting and adversely influences the vitrification. In addition, striae are likely to occur. The lower limit of the fluorine content may be, for example, 0% or more, particularly 0.1% or more.

The glass material preferably has a light transmittance of 80% or more, 82% or more, and particularly preferably 83% or more at a wavelength of 1064 nm. In addition, the light transmittance is preferably 60% or more, 65% or more, 70% or more, and particularly preferably 75% or more at a wavelength of 633 nm. Further, the light transmittance is preferably 30% or more, 50% or more, 60% or more, and particularly preferably 70% or more at a wavelength of 532 nm. When the light transmittance is high in the above wavelength range, the heat generation of the magnetic optical element due to light absorption is prevented, and the beam diameter change due to the thermal lens effect is likely to be prevented. Note that, the above light transmittance is a value when the thickness of the glass material is 1 mm. The upper limit of the light transmittance at each wavelength described above may be, for example, 100% or less, particularly 99% or less.

The glass material according to the present invention having the above configuration can having an increased light transmittance and a reduced beam diameter change. For example, a beam diameter change rate can be reduced to 30% or less, 25% or less, or 20% or less, and particularly 15% or less. Note that, the beam diameter change rate can be measured, for example, as follows. First, laser light with a wavelength of 1064 nm and an output of 50 W is incident, with a beam diameter of 1 mm, on a glass sample processed to a thickness of 3 mm, and the size of the beam diameter at a position 300 mm from the sample is measured. The beam diameter may be, for example, a value of 1/e². Next, using the beam diameter at an output of 10 mW as a reference, the beam diameter change rate when the output is 50 W can be calculated. Note that, in the case where the beam diameter change is observed due to the thermal lens effect of a collimating lens even in the absence of a sample, the beam diameter change rate can be determined by subtracting the beam diameter change rate in the absence of a sample from the measured beam diameter change rate.

The glass material according to the present invention has a Verdet constant of preferably 0.01 min/Oe·cm or more, and particularly preferably 0.02 min/Oe·cm or more at a wavelength of 1064 nm. The glass material having the above Verdet constant can be suitably used for a magnetic optical element. The upper limit of the Verdet constant at a wavelength of 1064 nm may be, for example, less than 0.5 min/Oe·cm, 0.4 min/Oe·cm or less, particularly 0.3 min/Oe·cm or less. Note that, the Verdet constant means a value measured by using a rotating analyzer method.

The glass material according to the present invention can be suitably used for a magnetic optical element (for example, a Faraday rotator) that constitutes a magnetic device such as an optical isolator, an optical circulator, and a magnetic sensor.

The glass material according to the present invention can be prepared, for example, by using a container-free floating method. FIG. 1 is a schematic cross-sectional view showing one embodiment of an apparatus for manufacturing the glass material according to the present invention. Hereinafter, a method for manufacturing the glass material according to the present invention will be described with reference to FIG. 1.

A glass material manufacturing apparatus 1 include a forming die 10. The forming die 10 also serves as a melting container. The forming die 10 has a forming surface 10a and a plurality of gas ejection holes 10b open to the forming surface 10a. The gas ejection holes 10b are connected to a gas supply mechanism 11 such as a gas cylinder. A gas is supplied from this gas supply mechanism 11 to the forming surface 10a via the gas ejection holes 10b. The type of the gas is not particularly limited, and for example, it may be air or oxygen, or a reducing gas containing a nitrogen gas, an argon gas, a helium gas, a carbon monoxide gas, a carbon dioxide gas, or hydrogen. Among these, it is preferable to use an inert gas from the viewpoint of preventing oxidation of the glass material and ensuring safety.

Using the glass material manufacturing apparatus 1, the glass material can be manufactured as follows. First, a glass raw material lump 12 is placed on the forming surface 10a. The glass raw material lump 12 is, for example, one obtained by integrating a raw material powder by press molding or the like, a sintered body obtained by integrating a raw material powder by press molding or the like and then performing sintering, or an aggregate of crystals having a composition equivalent to the target glass composition.

Next, the glass raw material lump 12 is floated above the forming surface 10a by ejecting a gas from the gas ejection holes 10b. That is, the glass raw material lump 12 is held in a state of not being in contact with the forming surface 10a. In this state, the glass raw material lump 12 is irradiated with laser light from a laser light irradiation device 13. Accordingly, the glass raw material lump 12 is heated and melted to undergo vitrification to obtain a molten glass. Thereafter, the molten glass is cooled to obtain a glass material. At this time, the molten glass and the glass material are cooled until the temperature is at least equal to or lower than the softening point. In the step of heating and melting the glass raw material lump 12 and the step of cooling the molten glass and the glass material until the temperature is at least equal to or lower than the softening point, it is preferable to at least continue ejecting the gas to prevent the contact between the forming surface 10a and the glass raw material lump 12, the molten glass, and further the glass material. Note that, the glass raw material lump 12 may be floated above the forming surface 10a by using a magnetic force generated by applying a magnetic field. In addition to the method of irradiation with laser light, the glass raw material lump 12 may be heated and melted by radiation heating or the like.

The method for manufacturing the glass material according to the present invention is not limited to the above container-free floating method. For example, the glass material according to the present invention may be manufactured by crucible melting. In the case of crucible melting, a large amount of raw material powder can be melted at once, making it likely to obtain a large glass material. The large glass material can be suitably used for high power laser applications or the like.

### Examples

Hereinafter, the present invention will be described based on Examples, but the present invention is not limited to these Examples.

Tables 1 to 3 show Examples 1 to 17 of the present invention and Comparative Examples 1 and 2.

**Table 1**

| | | Example 1 | Example 2 | Example 3 | Example 4 | Example 5 | Example 6 |
|---|---|---|---|---|---|---|---|
| Glass composition (mol%) | Tb₂O₃ | 30 | 31 | 32 | 33 | 34 | 29 |
| | B₂O₃ | 2 | 67 | 0 | 21 | 31 | 13 |
| | Al₂O₃ | 68 | 0 | 0 | 20 | 9 | 58 |
| | SiO₂ | 0 | 0 | 68 | 16 | 20 | 0 |
| | P₂O₅ | 0 | 2 | 0 | 10 | 6 | 0 |
| CeO₂ addition amount (mol%) | | 13 | 15 | 10 | 9 | 8 | 11 |
| FeO+Fe₂O₃ content (ppm) | | 0.5 | 2 | 3 | 0.8 | 1 | 0.2 |
| B₂O₃+Al₂O₃+SiO₂+P₂O₅ | | 70 | 69 | 68 | 67 | 66 | 71 |
| Verdet constant at 1064 nm (min/Oe·cm) | | 0.076 | 0.126 | 0.142 | 0.105 | 0.122 | 0.072 |
| Transmittance at 1064 nm (%) | | 86.3 | 83.2 | 82.2 | 85.3 | 84.2 | 86.1 |
| Tb³⁺ proportion (%) | | 98 | 98 | 99 | 99 | 98 | 99 |
| Beam diameter change rate (%) | | 8 | 9 | 10 | 9 | 9 | 7 |

**Table 2**

| | | Example 7 | Example 8 | Example 9 | Example 10 | Example 11 | Example 12 |
|---|---|---|---|---|---|---|---|
| Glass composition (mol%) | Tb₂O₃ | 40 | 35 | 25 | 20 | 15 | 50 |
| | B₂O₃ | 15 | 17 | 0 | 43 | 19 | 35 |
| | Al₂O₃ | 18 | 18 | 23 | 17 | 15 | 5 |
| | SiO₂ | 21 | 30 | 50 | 10 | 51 | 10 |
| | P₂O₅ | 6 | 0 | 2 | 10 | 0 | 0 |
| CeO₂ addition amount (mol%) | | 4 | 3 | 15 | 20 | 19 | 1.2 |
| FeO+Fe₂O₃ content (ppm) | | 4 | 0.1 | 0.5 | 0.9 | 0.2 | 0.7 |
| B₂O₃+Al₂O₃+SiO₂+P₂O₅ | | 60 | 65 | 75 | 80 | 85 | 50 |
| Verdet constant at 1064 nm (min/Oe·cm) | | 0.153 | 0.142 | 0.082 | 0.027 | 0.075 | 0.207 |
| Transmittance at 1064 nm (%) | | 85.3 | 85.2 | 85.9 | 86.9 | 87.1 | 84.3 |
| Tb³⁺ proportion (%) | | 99 | 99 | 99 | 99 | 99 | 99 |
| Beam diameter change rate (%) | | 11 | 10 | 8 | 7 | 6 | 15 |

**Table 3**

| | | Example 13 | Example 14 | Example 15 | Example 16 | Example 17 | Comparative Example 1 | Comparative Example 2 |
|---|---|---|---|---|---|---|---|---|
| Glass composit ion (mol%) | Tb₂O₃ | 51 | 51 | 51 | 50 | 52 | 59 | 31 |
| | B₂O₃ | 17 | 30 | 0 | 4 | 33 | 34 | 47 |
| | Al₂O₃ | 3 | 19 | 13 | 16 | 10 | 5 | 10 |
| | SiO₂ | 29 | 0 | 36 | 30 | 5 | 0 | 10 |
| | P₂O₅ | 0 | 0 | 0 | 0 | 0 | 2 | 2 |
| CeO₂ addition amount (mol%) | | 2 | 1.3 | 2 | 1.1 | 1.9 | 0 | 22 |
| FeO+Fe₂O₃ content (ppm) | | 3 | 0.1 | 0.1 | 1 | 5 | 0.7 | 3 |
| B₂O₃+Al₂O₃+SiO₂+ P₂O₃ | | 49 | 49 | 49 | 50 | 48 | 41 | 69 |
| Verdet constant at 1064 nm (min/Oe·cm) | | 0.215 | 0.198 | 0.209 | 0.202 | 0.207 | 0.222 | 0.080 |
| Transmittance at 1064 nm (%) | | 83.3 | 84.1 | 83.5 | 83.4 | 82.9 | 79.1 | 79.5 |
| Tb³⁺ proportion (%) | | 98 | 99 | 98 | 99 | 98 | 95 | 93 |
| Beam diameter change rate (%) | | 14 | 12 | 15 | 14 | 15 | 36 | 33 |

Each sample was prepared as follows. First, raw materials were mixed to have the glass compositions shown in Tables 1 to 3, and subjected to press molding. The press-molded raw material was subjected to sintering at 800°C for 5 hours to prepare a glass raw material lump.

Next, the glass raw material lump was coarsely crushed in a mortar into small pieces of 1 g. Next, a glass material (about 9 mm in diameter) was prepared by a container-free floating method using the small piece of the glass raw material lump and an apparatus similar to that shown in FIG. 1. A CO₂ laser oscillator of 100 W was used as a heat source. In addition, a nitrogen gas was used as the gas for floating the glass raw material lump in the air, and a supply flow rate was 1 L/min to 30 L/min. The obtained glass material was annealed at 770°C for 6 hours in a 4%-H₂/N₂ atmosphere, and then the following measurement was performed. The results are shown in Tables 1 to 3. Note that, In Examples 1 to 17, when the total content of all components including CeO₂ was converted to 100 mol%, a glass material containing from 12.6% to 51% of Tb₂O₃, from 47.1% to 71.4% of B₂O₃+Al₂O₃+SiO₂+P₂O₅, from 1.1% to 16.7% of CeO₂, and from 0.1 ppm to 4.9 ppm of FeO+Fe₂O₃ in mol% was obtained. At this time, the contents of Al₂O₃, SiO₂ and P₂O₅ are from 0% to 58.3% for from 0% to 60.2% for Al₂O₃, from 0% to 61.8% for SiO₂, and from 0% to 9.2% for P₂O₅.

The Verdet constant was measured by using a rotating analyzer method. Specifically, the obtained glass material was polished to a thickness of 1 mm, the Faraday rotation angle was measured in a wavelength range of 500 nm to 1100 nm in a 10 kOe magnetic field, and the Verdet constant at a wavelength of 1064 nm was calculated.

The light transmittance was measured using a spectrophotometer (V-670, manufactured by JASCO Corporation). Specifically, the obtained glass material was polished to a thickness of 1 mm, and the light transmittance at a wavelength of 1064 nm was read from a light transmittance curve. Note that, the light transmittance is an external transmittance including reflection.

The proportion of Tb³⁺ to the total Tb was measured using X-ray absorption fine structure analysis (XAFS). Specifically, a spectrum of an X-ray absorption edge structure region (XANES) was obtained, and the proportion (mol%) of Tb³⁺ to the total Tb was calculated based on the shift amount of the peak position of each Tb ion.

The beam diameter change rate was measured as follows. First, laser light with a wavelength of 1064 nm and an output of 50 W was incident, with a beam diameter of 1 mm, on a glass sample processed to a thickness of 3 mm, and the size of the beam diameter at a position 300 mm from the sample was measured. The beam diameter was set to a value of 1/e². Next, using the beam diameter at an output of 10 mW as a reference, the beam diameter change rate when the output was increased to 50 W was calculated. Note that, even in the absence of a sample, the beam diameter change was observed due to the thermal lens effect of a collimating lens, so that the beam diameter change rate was determined by subtracting a beam diameter change amount in the absence of a sample from the measured beam diameter change rate.

As shown in Tables 1 to 3, in the glass materials of Examples 1 to 17, the absolute value of Verdet constant is 0.027 to 0.215 at a wavelength of 1064 nm. In addition, the light transmittance is 82.2% or more at a wavelength of 1064 nm, and the beam diameter change rate is as low as 15% or less.

On the other hand, the glass materials of Comparative Examples 1 and 2 have a light transmittance of 79.5% or less and a beam diameter change rate of 33% or more.

### INDUSTRIAL APPLICABILITY

The glass material according to the present invention can be suitably used for a magnetic optical element (for example, a Faraday rotator) that constitutes a magnetic device such as an optical isolator, an optical circulator, and a magnetic sensor.

### REFERENCE SIGNS LIST

1 apparatus for manufacturing glass material
10 forming die
10a forming surface
10b gas ejection hole
11 gas supply mechanism
12 glass raw material lump
13 laser light irradiation device

## Claims

1. A glass material comprising, in mol%, from 10% to 58% of Tb₂O₃, from 1% to 89% of B₂O₃+Al₂O₃+SiO₂+P₂O₅, and from 0.01 ppm to 100 ppm of FeO+Fe₂O₃, and further comprising, in mol% as an external proportion, more than 1% to 20% of CeO₂.

2. The glass material according to claim 1, comprising, in mol%, from 0% to 70% of B₂O₃, from 0% to 70% of Al₂O₃, from 0% to 70% of SiO₂, and from 0% to 20% of P₂O₅.

3. The glass material according to claim 1, comprising, in mol%, more than 12% to 40% of from 1% to 20% of Al₂O₃, from 0% to 40% of SiO₂, and from 0% to 5% of P₂O₅.

4. The glass material according to any one of claims 1 to 3, comprising, in mol%, less than 5% of Pr₂O₃, and less than 5% of Dy₂O₃.

5. The glass material according to any one of claims 1 to 3, wherein a proportion of Tb³⁺ to total Tb is 55% or more.

6. The glass material according to any one of claims 1 to 3, wherein a light transmittance is 80% or more at a wavelength of 1064 nm.

7. A magnetic optical element comprising: the glass material according to any one of claims 1 to 3.
